# EUROPÄISCHE PATENTSCHRIFT

(11) **EP 1 051 647 B1**
(45) Veröffentlichungstag und Bekanntmachung des Hinweises auf die Patenterteilung: **02.04.2003**
(21) Anmeldenummer: 98966415.6
(22) Anmeldetag: 29.12.1998
(51) Int. Cl.: G02B 5/18, B42D 15/10, G06K 19/16

(54) **FLÄCHENMUSTER**
SURFACE PATTERN
MOTIF DE SURFACE

(30) Priorität: 27.01.1998 CH 19098
(43) Veröffentlichungstag der Anmeldung: 15.11.2000
(73) Patentinhaber: OVD Kinegram AG, 6301 Zug (CH)
(72) Erfinder: STAUB, René, CH-6330 Cham (CH); TOMPKIN, Wayne, Robert, CH-5400 Baden (CH)
(74) Vertreter: LOUIS, PÖHLAU, LOHRENTZ & SEGETH
(86) Internationale Anmeldenummer: EP9808492
(87) Internationale Veröffentlichungsnummer: WO99038038

(56) Entgegenhaltungen:
- EP-A- 0 105 099
- EP-A- 0 375 833
- US-A- 5 059 776
- US-A- 5 101 184

## Beschreibung

Die Erfindung bezieht sich auf eine Anordnung von optisch beugungswirksamen Flächen gemäss dem Oberbegriff der Ansprüche 1 und 7.

Solche Flächenmuster werden bei beugungsoptischen Sicherheitselementen, die aus Hologrammen und/oder mosaikartig zusammengesetzten Beugungsgittern aufgebaut sind, zur Erhöhung der Fälschungssicherheit zusätzlich verwendet.

Eine Anordnung der eingangs genannten Art bei beugungsoptischen Sicherheitselementen ist aus der EP-A 105'099 und EP- A 375'833 bekannt. Die EP-A 105'099 beschreibt die Erzeugung von variablen Mustern aus optisch beugungswirksamen Teilflächen, die z.B. als Marke auf ein Dokument geklebt werden und dessen Echtheit bezeugen. Wird das Sicherheitsmerkmal beleuchtet, so leuchten beim Drehen um eine Achse senkrecht zur Ebene des Sicherheitsmerkmals längs einer Bahn diese Teilflächen nacheinander auf. Die EP- A 375'833 beschreibt ein Sicherheitselement, dessen Fläche in Rasterfelder eingeteilt ist und jedes Rasterfeld in eine Anzahl Feldanteile unterteilt ist. Die Anzahl Feldanteile pro Rasterfeld bestimmt die Anzahl der unter vorbestimmten Blickrichtungen nacheinander sichtbaren Bilder oder Motive. Die gleichen Feldanteile aller Rasterfelder bilden die Bildelemente (= Pixel) eines der Bilder oder Motive und weisen solche Gitterstrukturen auf, dass das Bild oder Motiv nur aus einer vorbestimmten Richtung sichtbar ist. Die Helligkeit eines Pixels des Bilds ist durch den Flächenanteil der Beugungsstruktur im Feldanteil vorbestimmt.

Es ist auch aus der EP - 360'969 bekannt, wenigstens ein optisches Beugungselement des beugungsoptischen Echtheitsmerkmals in zwei Teilflächen zu unterteilen, deren mikroskopisch feinen asymmetrischen Beugungsgitter sich nur im Azimut um 180° unterscheiden bei sonst gleichen andern Gitterparametern. Mit diesen unterteilten Beugungselementen sind maschinell lesbare Informationen unauffällig in einem visuell sichtbaren Muster unterzubringen.

Die US 5'059'776 zeigt ein Strichkodefeld das entsprechend der Strichkodierung in Strichelemente und Hintergrundelemente eingeteilt ist. Die Flächen aller Strichelemente sind mit einem ersten asymmetrischen Reliefprofil und die Flächen aller Hintergrundelemente mit einem zweiten asymmetrischen Reliefprofil belegt. Die Folge von breiten und schmalen Strichelementen ist durch die Information im Strichkodefeld bestimmt.

Die oben aufgeführten Dokumente beschreiben Sicherheitselemente ohne wirksame Nutzung einer Helligkeitsmodulation innerhalb grösseren, vom unbewaffneten menschlichen Auge gut erkennbaren Flächen.

Des weiteren beschreibt die EP-A 401'466 ein Kunststofflaminat mit eingebetteten mikroskopisch feinen, optisch wirksamen Reliefstrukturen und dessen Verwendung als Sicherheitselement. Die verwendbaren Materialien sind beispielsweise aus der EP-0'201'323 BI bekannt.

Der Erfindung liegt die Aufgabe zugrunde, ein kostengünstiges und auch mit holographischen Kopierverfahren schwer zu fälschendes Flächenmuster mit einem in diffusem Licht gut sichtbaren, neuen Echtheitsmerkmal für beugungsoptische Sicherheitselemente zu schaffen.

Die genannte Aufgabe wird erfindungsgemäss durch die im Kennzeichen der Ansprüche 1 und 7 angegebenen Merlanale gelöst. Vorteilhafte Ausgestaltungen der Erfindung ergeben sich aus den abhängigen Ansprüchen.

Ausführungsbeispiele der Erfindung sind in den Zeichnungen dargestellt und werden im folgenden näher beschrieben.

Es zeigen:
- Figur 1: ein Flächenmuster,
- Figur 2a: ein asymmetrisches Beugungsgitter,
- Figur 2b: das asymmetrische Beugungsgitter um 180° gedreht,
- Figur 3a: ein anderes eingeteiltes Flächenelement in einer bestimmten Ausrichtung,
- Figur 3b: das eingeteilte Flächenelement um 180° gedreht,

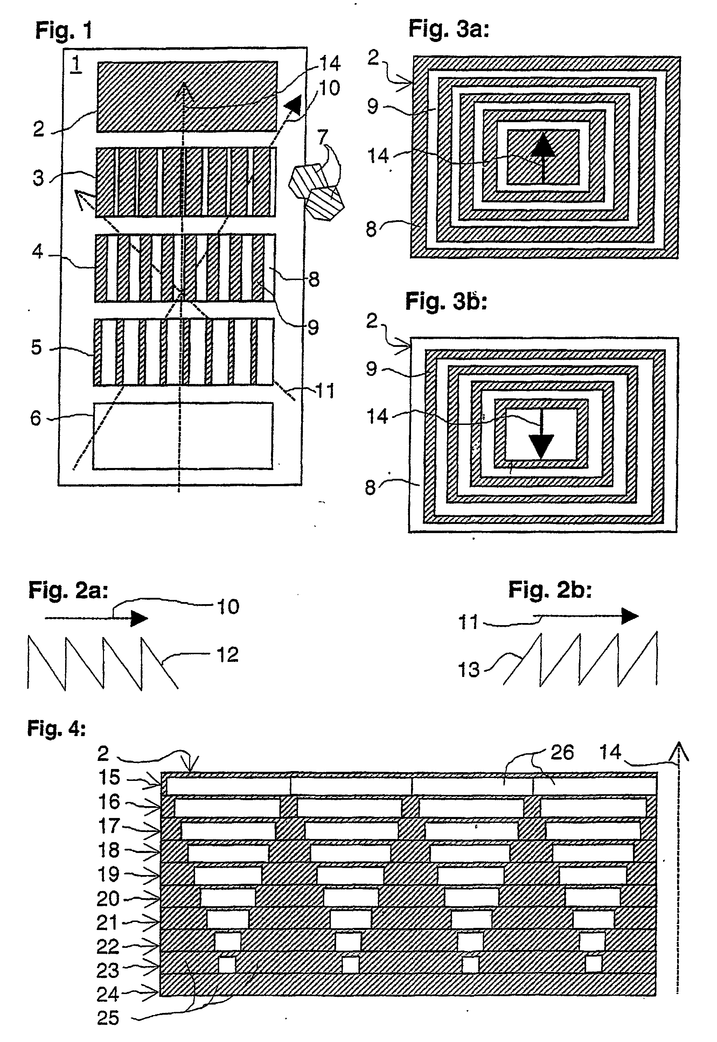

- Figur 3: das eingeteilte Flächenelement mit einer Streifenstruktur,
- Figur 4: die gegen eine Drehung um 180° scheinbar invarianten eingeteilten Flächenelemente,

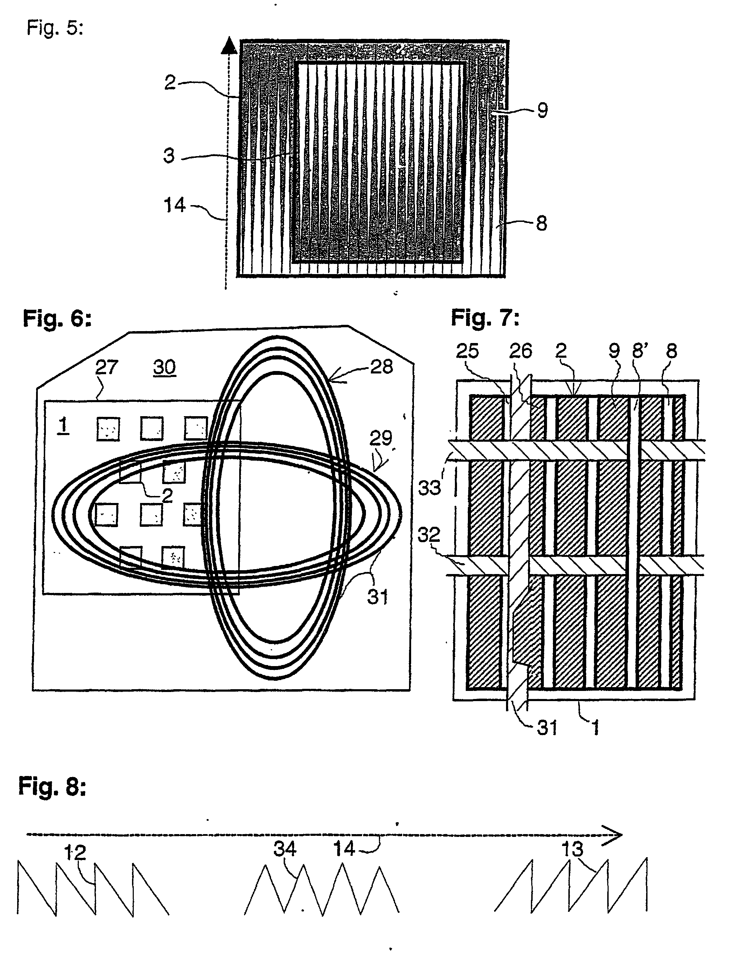

- Figur 5: ein Flächenmuster mit eingeteilten Flächenelementen,
- Figur 6: das eingeteilte Flächenelement mit Musterelementen,
- Figur 7: das Flächenelement,
- Figur 8: die Beugungsgitter

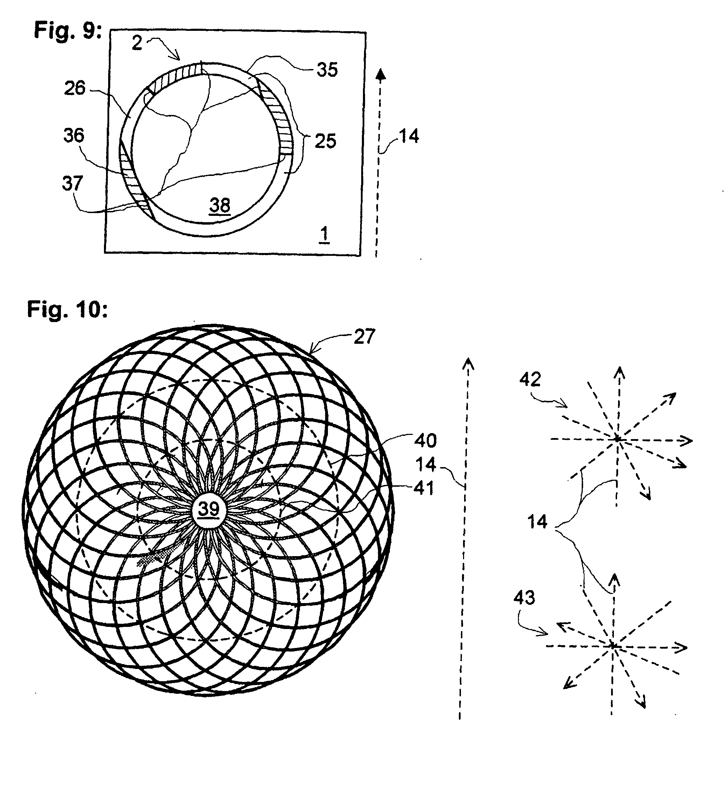

- Figur 9: das kreisringförmige Flächenelement und
- Figur 10: eine dekorative Anordnung von eingeteilten Flächenelementen,

In der Figur 1 bedeuten 1 ein Hintergrundfeld, 2 bis 7 Flächenelemente, 8 erste Teilflächen und 9 zweite Teilflächen sowie 10 und 11 ausgezeichnete Richtungen. Das Hintergrundfeld 1 ist als Flächenelement 1 Teil eines Flächenmusters eines beugungsoptischen Sicherheitselementes. Das Flächenmuster ist mosaikartig aus optisch beugungswirksamen oder spiegelnden oder streuenden oder transparenten Flächenelementen 1 bis 7 usw. zusammengesetzt, wobei die äussere Begrenzung der Flächenelemente 1 bis 7 und der Teilflächen 8, 9 keiner Beschränkung unterworfen sind; in der Figur 1 sind rein aus zeichnerischen Gründen die Flächenelemente 1 bis 6 und die Teilflächen 8, 9 als Rechtecke gezeichnet und von der Vielzahl der das Flächenmuster bildenden Flächenelementen 7 sind nur zwei gezeigt. Die Flächenelemente 2 bis 7 weisen mikroskopische Reliefstrukturen (Hologramme, Kinoforms, Beugungsgitter aller Art) auf, die einfallendes Licht beugen oder streuen, oder sind auf der ganzen oder einem Teil der Fläche spiegelnd oder transparent. Die mikroskopischen Reliefstrukturen sind in einem Kunststofflaminat eingebettet. Die Herstellung des Kunststofflaminats und die verwendbaren Materialien sind aus den eingangs genannten Schriften (EP-A 401'466; EP-0'201'323 B1) bekannt.

Auf der Fläche der im folgenden als "eingeteilte Flächenelemente" bezeichneten Flächenelemente 2 bis 6 ist wenigstens ein asymmetrisches Beugungsgitter 12 bzw. 13 gemäss den Figuren 2a und b abgeformt. Das in der Figur 2a dargestellte erste asymmetrische Beugungsgitter 12 weist einen Gittervektor parallel zur ersten ausgezeichneten Richtung 10 auf. In der Figur 2b ist der Gittervektor des zweiten asymmetrischen Beugungsgitters 13 antiparallel zur zweiten ausgezeichneten Richtung 11.

Die Figur 1 zeigt die eingeteilten Flächenelemente 2 bis 6. Eine Vielzahl davon ist wenigstens in die ersten und zweiten Teilflächen 8 und 9 aufgeteilt, wobei aus zeichnerischen Gründen die ersten Teilflächen 8 in hell und die zweiten Teilflächen 9 dunkel gehalten sind. Die ersten Teilflächen 8 sind mit dem ersten asymmetrischen Beugungsgitter 12 (Figur 2a) belegt, wobei der Gittervektor von jedem Beugungsgitter 12 parallel zur ersten ausgezeichneten Richtung 10 ausgerichtet ist. Die Gittervektoren der zweiten asymmetrischen Beugungsgitter 13 (Figur 2b) in den zweiten Teilflächen 9 sind alle antiparallel zur zweiten ausgezeichneten Richtung 11. Die ausgezeichnete Richtung 10 bzw. 11 bestimmt daher den Azimut des Gittervektors aller ersten asymmetrischen Beugungsgitter 12 bzw. den Azimut des Gittervektors aller zweiten asymmetrischen Beugungsgitter 13 der Flächenelemente 2 bis 6. In jedem eingeteilten Flächenelement 2 bis 6 sind benachbarte erste Teilflächen 8 durch wenigstens eine zweite Teilfläche 9 getrennt. Die asymmetrischen Beugungsgitter 12 und 13 in den beiden Teilflächen 8 und 9 unterscheiden sich wenigstens im Azimut.

Die eingeteilten Flächenelemente 2 bis 6 weisen unterschiedliche Flächenanteile der Teilflächen 8 und 9 auf, wobei jedem der eingeteilten Flächenelemente 2 bis 6, z.B. das N-te eingeteilte Flächenelement, einen vorbestimmten Flächenanteilswert A_{N} zugeordnet wird, der sich aus der Summe der Flächen aller ersten Teilflächen 8 des N-ten eingeteilten Flächenelements im Verhältnis zur Gesamtfläche aller ersten Teilflächen 8 und aller zweiten Teilflächen 9 des N-ten eingeteilten Flächenelements (Wertebereich von 0 bis und mit 1) berechnet.

Die eingeteilten Flächenelemente 2 bis 6 sind entsprechend ihrem Flächenanteilswert A_{N} im Mosaik aller Flächenelemente 1 bis 7 angeordnet. Im Beispiel der Figur 1 ist längs einer gemeinsamen ausgezeichneten Achse 14 parallel zu einer Längsseite des Hintergrundfelds 1, wobei das eingeteilte Flächenelement 2 den Flächenanteilswert A₂ = 0 und das eingeteilte Flächenelement 6 den Flächenanteilswert A₆ = 1 aufweisen, die restlichen Flächenanteilswerte A₃ A₄ und A₅ der eingeteilten Flächenelemente 3 bis 5 sind entsprechend ihrem Flächenanteilswerten A_{N} so geordnet, dass

0 < A₃ < A₄ < A₅ < ... < 1 sind. Anstelle dieser monotonen Folge der Flächenanteilswerte A_{N} längs der Achse 14 sind auch andere Anordnungen realisierbar, wobei die Flächenanteilswerte A_{N} einer wenigstens stückweise stetigen Funktion F folgen. Die gemeinsame ausgezeichnete Achse 14 kann beispielsweise auch parallel zur vektoriellen Summe aus der ersten und der zweiten ausgezeichneten Richtung 10 und 11 gewählt sein und muss nicht längs einer Berandung des Hintergrundfelds I ausgerichtet sein. Der Abstand der eingeteilten Flächenelemente 2 bis 6 von der Achse 14 hängt von der Gestaltung des Flächenmusters ab.

Bei senkrecht einfallendem Licht beugen die asymmetrischen Beugungsgitter 12 und 13 das Licht in der Ebene, die durch die Richtung des einfallenden Lichts und den Gittervektor bestimmt ist, wobei die Beugungswinkel von der Beugungsordnung, der Spatialfrequenz des Beugungsgitters und der Wellenlänge des Lichtes abhängen. Die Richtung des Gittervektors ist bei den asymmetrischen Beugungsgittern 12, 13 eine bevorzugte, daher wird Licht mit einer grösseren Intensität in die positiv gezählten Beugungsordnungen gebeugt als in die negativ gezählten. Bei den positiv gezählten Beugungsordnungen weist die Richtung des gebeugten Lichts eine Komponente in Richtung des Gittervektors auf, bei den negativ gezählten Beugungsordnungen ist diese Komponente dem Gittervektor entgegengesetzt. Die Beugungsgitter mit geradlinigen Furchen sind nur in einem engen Bereich des durch die Richtung des Gittervektors vorbestimmten Azimuts ϕ bzw. ϕ + 180° als farbige Fläche sichtbar.

Diese geordnete Reihe von eingeteilten Flächenelementen 2 bis 6 hat den Vorteil, dass sich bei vorgegebener Beleuchtung und bei einer Betrachtung in einer der ausgezeichneten Richtungen 10 und 11 die Gesamthelligkeit jedes der Flächenelemente 2 bis 6 entsprechend seinem Flächenanteilswert A_{N} stetig bzw. in Schritten der Vorbestimmten Funktion F längs der Achse 14 ändert. Das Sicherheitsmerkmal wird erkannt, wenn das Flächenmuster wie in der EP-A 105'099 um eine auf dem Sicherheitselement senkrecht stehende Drehachse von einer ausgezeichneten Richtung 10 bzw. 11 in die andere ausgezeichnete Richtung 11 bzw. 10 gedreht wird. In der ausgezeichneten Richtung 10 sind nur die Teilflächen 8 sichtbar, wobei die Helligkeit vom eingeteilten Flächenelement 6 gegen das eingeteilte Flächenelement 2 abnimmt. In der ausgezeichneten Richtung 11 sind nur die zweiten Teilflächen 9 sichtbar und die Helligkeit der zweiten Teilflächen 9 nimmt in umgekehrter Richtung ab. Bei einer Drehung um 180° ändert sich nur die absolute Helligkeit der Flächenelemente 2 bis 6 und ist ohne Referenz schwer zu erkennen. Als Referenz kann das Hintergrundfeld 1 dienen. Das Hintergrundfeld 1 als Referenz kann in den nicht von den Flächenelementen 2 bis 6 bedeckten freien Flächen mit einem symmetrischen Beugungsgitter oder mit einem der beiden asymmetrischen Beugungsgitter 12 und 13 belegt sein. Das Auge vergleicht die Helligkeit der Flächenelemente 2 bis 6 mit der konstanten Helligkeit des Hintergrundfelds 1. Besonders auffallend wird die Aenderung der Gesamthelligkeit empfunden, wenn das unbewaffnete menschliche Auge die Einteilung in die ersten und zweiten Teilflächen 8 und 9 nur noch schwer erkennen kann, d.h. wenn die Teilflächen 8, 9 wenigstens in einer Richtung weniger als 1 mm (vorzugsweise sogar weniger als 0,5 mm) messen.

Unter normalen Betrachtungsbedingungen (Sonne, Punktlichtquelle) verleihen die beiden asymmetrischen Beugungsgitter 8 und 9 den entsprechenden Teilflächen 8, 9 eine von der Gitterfrequenz abhängige Farbe In vielen Anwendungen werden für die beiden asymmetrischen Beugungsgitter 8 und 9 gleiche mikroskopisch feine Reliefs gewählt, die bis auf den Azimut gleiche Gitterparameter (Spatialfrequenz, Reliefform usw.) aufweisen, so dass der Betrachter die Teilflächen 8 bzw. 9 in der gleichen Farbe erblickt.

Unterscheidet sich das erste asymmetrische Beugungsgitter 12 der ersten Teilflächen 8 vom zweiten asymmetrischen Beugungsgitter 13 der zweiten Teilflächen 9 im Wert des Azimuts genau um 180°, d.h. sind die Richtungen 10, 11 und 14 parallel, so sind in der gemeinsamen ausgezeichneten Achse 14 beide Teilflächen 8 und 9 sichtbar; sie unterscheiden sich aber wenigstens in der Helligkeit. Betrachtet beispielsweise ein Beobachter das Flächenmuster in der Richtung der gemeinsamen ausgezeichneten Achse 14, weist der Gittervektor der ersten asymmetrische Beugungsgitter 12 vom Beobachter weg. Daher erscheinen die ersten Teilflächen 8 weniger hell als die zweiten Teilflächen 9, deren zweites asymmetrisches Beugungsgitter 13 bevorzugt das Licht in Richtung des Beobachters beugt. Für den Beobachter nimmt die Helligkeit der auf der gemeinsamen ausgezeichneten Achse 14 angeordneten Flächenelemente 6 bis 2 mit grösserem Abstand von seinem Auge zu, da der Anteil der zweiten Teilflächen 9 auf Kosten der ersten Teilflächen 8 grösser wird. Nach einer Drehung des Flächenmusters in seiner Ebene um 180° zeigt sich dem Beobachter entgegen seiner Erwartung die gleiche Verteilung der Helligkeit, da nun die ersten Teilflächen 8 heller als die zweiten Teilflächen 9 sind, weil die ersten asymmetrischen Beugungsgitter 12 der ersten Teilflächen 8 bevorzugt das Licht in Richtung des Beobachters beugen. Der Vorteil dieses Sicherheitsmerkmals ist die einfache Prüfung durch eine Drehung des Flächenmusters in seiner Ebene um 180°.

Die Figur 3a zeigt eine andere Einteilung des Flächenelements 2, wobei hier die ersten Teilflächen 8 und die zweiten Teilflächen 9 ineinander verschachtelte, ähnliche Streifen in Form von Rechtecken sind. Selbstverständlich können diese ineinander verschachtelte, ähnliche Streifen die Form von Kreisringen, Mäandern, irgendwelchen Vielecken usw. aufweisen. Die Form der Streifen richtet sich nach dem graphischen Inhalt des Flächenelements 2. Die gemeinsame ausgezeichnete Achse 14 im inneren Rechteck zeigt die Ausrichtung der Gittervektoren der asymmetrischen Beugungsgitter 12 (Figur 2a) und 13 (Figur 2b), wobei in den dunkel gefärbten ersten Teilflächen 8 der Gittervektor parallel zur Achse 14 und in den hell gefärbten zweiten Teilflächen 9 der Gittervektor antiparallel zur Achse 14 ist. Bei senkrechter Beleuchtung und der Blickrichtung in Richtung der Achse 14 erscheinen die in der Zeichnung der Figur 3a hellen zweiten Teilflächen 9 heller als die dunkel gefärbten ersten Teilflächen 8.

In der Figur 3b ist dasselbe Flächenelement 2 unter den gleichen Bedingungen für die Beleuchtungs und Beobachtungsrichtung bei der Figur 3a dargestellt, jedoch ist das Flächenelement 2 um 180° in seiner Ebene gedreht, wie dies der Pfeil der Achse 14 andeutet. Die Helligkeitswerte der Teilflächen 8 und 9 sind hier wegen der Verwendung der asymmetrischen Beugungsgitter 12 (Figur 2a) und 13 (Figur 2b) vertauscht. Die ersten Teilflächen 8 erscheinen nun hell und die zweiten Teilflächen 9 dunkel.

Damit die Form und der Helligkeitswechsel der innersten Teilfläche 8 auf den Beobachter genügend auffällig wirkt, ist die innerste Teilfläche 8 genügend gross (> 1 mm²) zu wählen. Der auffällige Helligkeitswechsel bietet den Vorteil einer einfachen Prüfung dieses Sicherheitsmerkmals. Das Merkmal ist selbst referenzierend, die Gesamtheit der Streifen der Teilflächen 8, 9 um die innerste Teilfläche 8 einen Rahmen bilden, dessen Helligkeit sich von der Helligkeit der innersten Teilfläche 8 unterscheidet.

In einer anderen Ausführung verändern sich die Breiten der Teilflächen 8 und 9 in radialer Richtung, z.B. vergrössert sich die Breite der zweiten Teilflächen 9 auf Kosten der ersten Teilflächen 8 usw.

In der Figur 4 ist eine weitere Einteilung des eingeteilten Flächenelements 2 in Streifen 15 bis 24 gezeigt, die in erste und zweite Teilflächen 25 und 26 unterteilt sind. Die ersten Teilflächen 25 sind mit dem ersten asymmetrischen Beugungsgitter 12 (Figur 2a) und die zweiten Teilflächen 26 sind mit dem zweiten asymmetrischen Beugungsgitter 13 (Figur 2b) derart belegt, dass die Gittervektoren der beiden asymmetrischen Beugungsgitter 12 und 13 antiparallel und längs der Richtung der gemeinsamen ausgezeichneten Achse 14 ausgerichtet sind, z.B. quer zur Streifenstruktur des eingeteilten Flächenelements 2. Bei der senkrechten Beleuchtungsrichtung und der durch die gemeinsame ausgezeichnete Achse 14 vorgegebene Beobachtungsrichtung erscheinen die zweiten Teilflächen 26 heller als die ersten Teilflächen 25, die in der Zeichnung der Figur 4 dunkel unterlegt sind. Die Streifen 15 bis 24 weisen unterschiedliche Flächenanteilswerte A_{N} der Teilflächen 25 und 26 auf, wobei jeder der Streifen 15 bis 24, z.B. den N-ten Streifen, einen vorbestimmten Flächenanteilswert A_{N} im Bereich von 0 bis 1 zugeordnet wird, der sich aus der Summe aller ersten Teilflächen 25 des N-ten Streifens im Verhältnis zur Gesamtfläche aller ersten Teilflächen 25 und aller zweiten Teilflächen 26 des N-ten Streifens berechnet. Der Flächenanteilswert AN nimmt in Richtung der gemeinsamen ausgezeichneten Achse 14 von A₂₄ = 1 auf Null für A₁₅ ab. Falls die Diagonale der Teilflächen 25 und 26 in den Streifen 15 bis 23 den Wert 0,5 mm unterschreitet, weist wegen des beschränkten Auflösungsvermögens des menschlichen Auges jeder der Streifen 15 bis 23 eine gleichmässige Helligkeit auf, die sich im gezeigten Beispiel von der Helligkeit der benachbarten Streifen unterscheidet. Anstelle der in der Zeichnung der Figur 4 gezeigten monotonen Folge der Flächenanteilswerte A_{N} längs der Achse 14 sind auch andere Anordnungen realisierbar, wobei die Flächenanteilswerte A_{N} einer wenigstens stückweise stetigen Funktion F folgen. Bei einer sehr feinen Einteilung der Streifen 15 bis 24 sind die Streifen als solche von blossem Auge nicht mehr zu erkennen, die Helligkeit scheint sich kontinuierlich zu verändern.

Zwei derart in feine Streifen 15 bis 24 eingeteilte Flächenelemente 2 und 3 sind in der Figur 5 gezeigt. Die beiden eingeteilten Flächenelemente 2; 3 sind derart ineinander verschachtelt, dass das eine Flächenelement 3 einen Teil des ändern Flächenelements 2 überdeckt. Im gezeigten Beispiel liegt das eine Flächenelement 3 ganz innerhalb des äusseren Flächenelements 2. Das eine Flächenelement 3 hat das erste asymmetrische Beugungsgitter 12 (Figur 2a) in den ersten Teilflächen 25 (Figur 4) und das zweite asymmetrische Beugungsgitter 13 (Figur 2b) in den zweiten Teilflächen 26 (Figur 4) angeordnet. Beim andern Flächenelement 2 sind die ersten Teilflächen 25 mit dem zweiten asymmetrischen Beugungsgitter 13 und in den zweiten Teilflächen 26 mit dem ersten asymmetrischen Beugungsgitter 12 belegt. Im gezeigten Beispiel sind die Streifen 15 bis 24 der beiden eingeteilten Flächenelemente 2 und 3 parallel und gleich eingeteilt. Das gezeigte Muster kann aber auch durch eine Einteilung des eingeteilten Flächenelements 2 in schmale dreieckförmige erste ("hell") und zweite ("dunkle") Teilflächen 8, 9 erreicht werden. Im eingeteilten Flächenelement 3 ist die mit zeichnerischen Mitteln dargestellte Zuordnung der "hellen" und "dunklen" Dreiecken zu den Teilflächen 8, 9 vertauscht. Das Echtheitsmerkmal der in der Figur 4 gezeigten Elementes ist wiederum die Invarianz der Verteilung der Helligkeitsverteilung gegen eine Drehung des Flächenmusters um 180°.

Das Flächenmuster in der Figur 6 weist eine Anordnung 27 gemäss der Figur 1 auf, wobei zusätzlich Musterelemente 28 und 29, die hier beispielsweise als ovale Elementen dargestellt sind, über die Anordnung 27 hinweg angeordnet sind. Das Flächenmuster mit der Anordnung 27 und den Musterelemente 28 und 29 bilden das Motiv 30 des Sicherheitselements. Die Musterelemente 28 und 29 sind bandförmig und die Flächen von Bändern 31 der Musterelemente 28 und 29 sind mit mikroskopischen Reliefstrukturen (Hologramme, Kinoforms, Beugungsgitter aller Art), Spiegelflächen oder Transparentflächen belegt und/oder mit herkömmlichen Techniken bedruckt. Die Bänder 31 können zum Teil das Hintergrundfeld 1 und die Flächenelemente 2 bis 7 (Figur 1) überdecken.

Die Figur 7 zeigt beispielhaft die Auswirkung auf das eingeteilte Flächenelement 2 und das Hintergrundfeld 1. Das eingeteilte Flächenelement 2 ist in die ersten Teilflächen 8, 8', 25 und die zweiten Teilflächen 9, 26 unterteilt. So sind die erste Teilfläche 25 und die zweite Teilfläche 26 durch das Band 31 getrennt. Weitere Bänder 32 und 33 der Musterelemente 28 (Figur 6) und 29 (Figur 6) schneiden beispielsweise die Teilflächen 8, 9, 25 und 26, sind aber selbst durch die Teilfläche 8' unterbrochen. Die Bänder 31 bis 33 können in der Breite moduliert sein. Sie decken teilweise die ersten Teilflächen 8, 8', 25 und zweiten Teilflächen 9, 26 ab und verringern ihren Flächenanteil. Solche Bänder 31 bis 33 können beschränkt auf eines der Flächenelemente 2 bis 6 als mit mikroskopischen Reliefstrukturen belegte Hilfsteilflächen zum unabhängigen Abgleich der Helligkeit der ersten Teilflächen 8, 8', 25 bzw. der zweiten Teilflächen 9, 26 im Flächenelement 2 bis 6 dienen. Die einzige Bedingung ist, dass die Hilfsteilflächen nicht zusammen mit den ersten und zweiten Teilflächen sichtbar sind, z.B. sind die Hilfsteilflächen als Spiegel oder als lichtstreuende Struktur ausgebildet oder eben Teil eines aus einer anderen Richtung sichbaren Musterelements 38 bzw. 29. Anstelle von Bändern 31 bis 33 kann auch eine in der EP-A 0'330'738 beschriebene Mikroschrift verwendet werden.

In der Figur 8 sind drei Beugungsstrukturen gezeigt, die asymmetrischen Beugungsgitter 12, 13 und ein symmetrisches Beugungsgitter 34. Das symmetrische Beugungsgitter 34 beugt das senkrecht einfallende Licht gleicher Intensität in die positiven und negativen Beugungsordnungen. Das Beugungsverhalten des symmetrischen Beugungsgitter 34 ist daher invariant gegen eine Drehung in seiner Ebene um 180°.

Gemäss der Figur 9 weist das Flächenelement 2 eine beliebige Form 35 auf, die z.B. in sich geschlossen ist und ein Kreisring bildet. Die drei Beugungsgitter 12, 13 und 34 besitzen parallel oder antiparallel zur gemeinsamen ausgezeichneten Achse 14 ausgerichtete Gittervektoren und belegen die Fläche des in sich geschlossen Streifens 15 (Figur 4) derart, dass die ersten Teilflächen 25 mit dem ersten asymmetrischen Beugungsgitter 12 und die zweiten Teilflächen 26 mit dem zweiten asymmetrischen Beugungsgitter 13 durch ein Zwischenstück 36 mit dem symmetrischen Beugungsgitter 34 getrennt ist. Trennlinien 37 verlaufen zwischen den Teilflächen 25, 26 und dem Zwischenstück 36 senkrecht oder schief zur Berandung des Streifens 15. Die schiefe Trennlinie 37 ermöglicht einen allmählichen Uebergang von den Teilflächen 25 bzw. 26 zum Zwischenstück 36. Bei senkrechter Beleuchtung des Flächenmusters erkennt der Beobachter sobald er ungefähr in Richtung der gemeinsamen ausgezeichneten Achse 14 blickt die ersten und zweiten Teilflächen 25, 26 mit unterschiedlicher Helligkeit gegenüber den Flächen der Zwischenstücke 36. Nach einer Drehung um 180° in der Ebene des Flächenmusters werden die ersten und zweiten Teilflächen 25, 26 wieder sichtbar, jedoch mit vertauschten Helligkeitswerten. Die Helligkeit der Zwischenstücke 36 ändert hingegen nicht. Eine bei in sich geschlossenen Formen ergebende Innenkreisfläche 38 kann beispielsweise transparent oder spiegelnd ausgeführt sein. Die Form des Flächenelements 2 kann statt des Kreisrings 35 auch die Form von Mäandern, irgendwelchen Vielecken usw. aufweisen.

Die Figur 10 zeigt eine Anordnung 27 von vielen in der Figur 9 dargestellten Kreisringen 35 der Figur 9, die regelmässig um ein Zentrum 39 gruppiert sind, wobei sich benachbarte Kreisringe 35 überlappen. Die Teilflächen 25 (Figur 9), 26 (Figur 9) und 36 (Figur 9) sind auf den Kreisringen 35 so angeordnet, dass die Gittervektoren auf eine einzige gemeinsame ausgezeichnete Achse 14 ausgerichtet sind. Die ersten Teilflächen 25 bedecken die Kreisringe 35 innerhalb des Innenrings 40, die zweiten Teilflächen 26 bedecken die Kreisringe 35 ausserhalb des Aussenrings 41. Die Zwischenstücke 36 (Figur 9) erstrecken sich auf den Kreisringen 35 zwischen dem Innenring 40 und dem Aussenring 41. Das Flächenmuster zeigt in der einen Betrachtungsrichtung die Anordnung 27 mit dunklen Kreisringabschnitten im Innenring 40 und hellen Kreisringabschnitten ausserhalb des Aussenrings 41, in der andern Betrachtungsrichtung (nach einer Drehung um 180°) sind die Helligkeitswerte vertauscht.

Eine Ueberlagerung mehrerer Anordnungen 27 mit einem gemeinsamen Zentrum 39 aber mit verschiedenen Richtungen der Achse 14 jeder Anordnung 27 ergeben beim Drehen des Flächenmusters in seiner Ebene auffallende kinematische Effekte. Entsprechend dem Drehwinkel leuchten die einzelnen Anordnungen 27 nacheinander auf, bis die 180° Drehung erreicht ist, wobei erst dann die Helligkeitswerte vertauscht werden, die für den Drehbereich 180° bis 360° gleich bleiben. Die verschiedenen Richtungen der Achsen 14 sind wie im Bündel 42 ausgerichtet. Die Helligkeitswerte können sich aber auch von einer sichtbaren Anordnung 27 zur nächsten vertauschen im ganzen Drehbereich 0° bis 360°, wenn die verschiedenen Richtungen der Achsen 14 wie im Bündel 43 ausgerichtet sind.

Der Vorteil dieser Sicherheitsmerkmale ist die einfache Prüfung durch eine Drehung des Flächenmusters in seiner Ebene. Wie in der EP-A 105'099 beschrieben erfolgt die Drehung um eine auf dem Flächenmuster senkrecht stehende Drehachse, die in der Figur 1 senkrecht auf der Zeichnungsebene steht. Die Flächenelemente 2 bis 6 sind dann sichtbar, wenn eine der ausgezeichneten Richtungen 10, 11, 14, 42 (Figur 10), 43 (Figur 10) zum Beobachter oder von ihm weg zeigt und er das Flächenmuster unter dem durch die Beugungsbedingungen richtigen Winkel beobachtet. Bei einer gerichteten Beleuchtung (Sonne, Punktlichtquelle) zeigen die Flächenelemente 2 bis 6 Beugungsfarben, die sich bei diffuser Beleuchtung oder ausgedehnten künstlichen Lichtquellen im allgemeinen zu einer fast weissen Farbe vermischen. Bei diffusem Licht weisen diese Flächenmuster den Vorteil auf, dass Helligkeitsabstufungen und Vertauschen von Helligkeitsunterschieden im weissem Licht vom Beobachter besonders leicht erkannt werden.

Es ist zu bemerken, dass die in den Figuren verwendeten Pfeile für die Richtungen 10, 11 und 14 sowie Begrenzungs- und Trennlinien lediglich Hilfen zur Beschreibung des Sachverhalts sind und auf den realen Flächenmustern nicht sichtbar sind. Ebenso sind die "hell" und "dunkel" gefärbten Teilflächen 8, 9 lediglich Erklärungshilfen. Der Ausdruck "In der gemeinsamen ausgezeichneten Achse 14 sichtbar" meint, dass die Blickrichtung eine Komponente parallel zur Achse 14 aufweist. Das gebeugte Licht wird aus der Ebene des Beugungsgitters abgelenkt. Anstelle einer Drehung um 180° kann auch ein Kippen des Flächenmusters über den Reflexionspunkt (= nullte Beugungsordnung) hinaus das Vertauschen der Helligkeitswerte bewirken. Unter dem Begriff "Helligkeit" ist stets die Flächenhelligkeit gemeint, also die Intensität des in der Betrachtungsrichtung gesandten gebeugten Lichts pro Flächeneinheit der Beugungsgitter. Die Beugungsgitter der Figuren 2 und 8 sind in der idealen Form gezeigt; die realen Beugungsgitter 12, 13 und 34 dürften jedoch anstelle der scharfen Kanten kleine Verrundungen aufweisen. Spezielle, hier auch verwendbare symmetrische und asymmetrische Beugungsgitter sind in der am gleichen Tag von der Anmelderin beim Eidgenössischen Institut für Geistiges Eigentum getätigten Anmeldung beschrieben.

## Patentansprüche

1. Flächenmuster aus mosaikartig angeordneten, mikroskopische Reliefstrukturen aufweisenden Flächenelementen (1 bis 7), von denen eine Vielzahl von eingeteilten Flächenelementen (2 bis 6) wenigstens in erste und zweite Teilflächen (8; 9) unterteilt ist und die eingeteiltens in Flächenelemente (2 bis 6) beugungsoptisch wirksame, asymmetrische Beugungsgitter (12; 13) enthalten, wobei in den unterteilten eingeteilten Flächenelementen (2 bis 6) benachbarte erste Teilflächen (8) durch zweite Teilflächen (9) getrennt sind und sich die Gittervektoren der asymmetrischen Beugungsgitter (12; 13) der ersten Teilflächen (8) und der zweiten Teilflächen (9) im Azimut unterscheiden, wobei die asymmetrischen Beugungsgitter (12) der ersten Teilflächen (8) aller eingeteilten Flächenelemente (2 bis 6) den gleichen ersten Wert des Azimuts und die asymmetrischen Beugungsgitter (13) der zweiten Teilflächen (9) aller eingeteilter Flächenelemente (2 bis 6) den gleichen zweiten Wert des Azimuts besitzen,
**dadurch gekennzeichnet,**
**dass** das Verhältnis der Summe aller ersten Teilflächen (8) des N-ten eingeteilten Flächenelements zur Gesamtfläche des N-ten eingeteilten Flächenelements einen dem N-ten eingeteilten Flächenelement eigenen Flächenanteilswert A_{N} bildet und
**dass** längs einer vorbestimmten ausgezeichneten Achse (14) alle eingeteilten Flächenelemente (2 bis 6) entsprechend ihrem Flächenanteilswert A_{N} zwischen den eingeteilten Flächenelementen mit dem Flächenanteilswert A_{N} = 0 und A_{N} = 1 im Mosaik aller Elemente (1 bis 7) angeordnet sind.

2. Flächenmuster nach Anspruch 1,
**dadurch gekennzeichnet,**
**dass** die ersten Teilflächen (8) und die zweiten Teilflächen (9) wenigstens in einer Richtung weniger als 1 mm messen.

3. Flächenmuster nach Anspruch 1 oder 2,
**dadurch gekennzeichnet,**
**dass** sich das asymmetrische Beugungsgitter (12) der ersten Teilflächen (8) von den asymmetrischen Beugungsgittern (13) der zweiten Teilflächen (9) im Wert des Azimuts um 180° unterscheiden.

4. Flächenmuster nach einem der Ansprüche 1 bis 3,
**dadurch gekennzeichnet,**
**dass** die ersten Teilflächen (8) und die zweiten Teilflächen (9) des Flächenelements (2 bis 6) ineinander verschachtelte Streifen von ähnlicher Form sind.

5. Flächenmuster nach einem der Ansprüche 1 bis 4,
**dadurch gekennzeichnet,**
**dass** die asymmetrischen Beugungsgitter (12; 13) der ersten und der zweiten Teilflächen (8; 9) aller eingeteilter Flächenelemente (2 bis 6) mit Ausnahme des Azimuts gleiche Gitterparameter aufweisen.

6. Flächenmuster nach einem der Ansprüche 1 bis 5,
**dadurch gekennzeichnet,**
**dass** wenigstens die eingeteilten Flächenelemente (2 bis 6) auf einem Hintergrundfeld (1) angeordnet sind und dass das Hintergrundfeld (1) mit dem ersten asymmetrischen Beugungsgitter (12) der ersten Teilflächen (8) belegt ist.

7. Flächenmuster nach einem der Ansprüche 1 bis 6,
**dadurch gekennzeichnet,**
**dass** wenigstens zwei der eingeteilten Flächenelemente (2 bis 6) derart ineinander verschachtelt sind, dass das eine Flächenelement (3) einen Teil des andern Flächenelements (2) überdeckt und dass das eine Flächenelement (3) das erste asymmetrische Beugungsgitter (12) in den ersten Teilflächen (25) und das zweite asymmetrische Beugungsgitter (13) in den zweiten Teilflächen (26) aufweist und beim andern Flächenelement (2) die ersten Teilflächen (8) mit dem zweiten asymmetrischen Beugungsgitter (13) und die zweiten Teilflächen (26) mit dem ersten asymmetrischen Beugungsgitter (12) belegt sind.

8. Flächenmuster aus mosaikartig angeordneten, mikroskopische Reliefstrukturen aufweisenden Flächenelementen (1 bis 7), von denen die wenigstens in erste und zweite Teilflächen (8; 9; 25; 26) unterteilten eingeteilten Flächenelemente (2 bis 6) beugungsoptisch wirksame, asymmetrische Beugungsgitter (12; 13) enthalten, wobei sich die Gittervektoren der asymmetrischen Beugungsgitter (12; 13) der ersten Teilflächen (8; 25) und der zweiten Teilflächen (9; 26) im Azimut unterscheiden und die asymmetrischen Beugungsgitter (12) der ersten Teilflächen (8; 25) aller eingeteilten Flächenelemente (2 bis 6) den gleichen ersten Wert des Azimuts und die asymmetrischen Beugungsgitter (13) der zweiten Teilflächen (9; 26) aller eingeteilter Flächenelemente (2 bis 6) den gleichen zweiten Wert des Azimuts besitzen,
**dadurch gekennzeichnet,**
**dass** die unterteilten Flächenelemente (2 bis 6) in Streifen (15 bis 24) und die Streifen (15 bis 24) in erste und zweite Teilflächen (8, 9; 25; 26) unterteilt sind,
**dass** in jedem in erste und zweite Teilflächen (8, 9; 25; 26) unterteilten Streifen (15 bis 24) benachbarte erste Teilflächen (25) durch wenigstens eine zweite Teilfläche (26) getrennt sind,
**dass** in einem N-ten der Streifen (15 bis 24) die Summe aller ersten Teilflächen (25) des N-ten Streifens zur Gesamtfläche des N-ten Streifens (15 bis 24) einen Flächenanteilswert A_{N} aufweist und
**dass** längs einer vorbestimmten ausgezeichneten Achse (14) alle unterteilten Streifen (15 bis 24) entsprechend ihrem Flächenanteilswert A_{N} zwischen den Streifen (15 bis 24) mit dem Flächenanteilswert A_{N} = 0 und A_{N} = 1 im Mosaik aller Elemente (1 bis 7) angeordnet sind.

9. Flächenmuster nach Anspruch 8,
**dadurch gekennzeichnet , dass** das unterteilte Flächenelement (2 bis 6) quer zur ausgezeichneten Achse (14) in die Streifen (15 bis 24) unterteilt ist.

10. Flächenmuster nach Anspruch 8 oder 9,
**dadurch gekennzeichnet,**
**dass** die Breite der Streifen (15 bis 24) einen Millimeter oder weniger beträgt.

11. Flächenmuster nach einem der Ansprüche 8 bis 10,
**dadurch gekennzeichnet,**
**dass** das erste asymmetrische Beugungsgitter (12) der ersten Teilflächen (25) der Streifen (15 bis 24) und das zweite asymmetrische Beugungsgitter (13) der zweiten Teilflächen (26) der Streifen (15 bis 24) eine Differenz im Azimut von 180° aufweisen.

12. Flächenmuster aus mosaikartig angeordneten, mikroskopische Reliefstrukturen aufweisenden Flächenelementen (2), von denen die wenigstens in erste und zweite Teilflächen (25; 26) unterteilten eingeteilten Flächenelemente (2) beugungsoptisch wirksame, asymmetrische Beugungsgitter (12; 13) enthalten, wobei sich die Gittervektoren der asymmetrischen Beugungsgitter (12; 13) der ersten Teilflächen (25) und der zweiten Teilflächen (26) im Azimut unterscheiden und die asymmetrischen Beugungsgitter (12) der ersten Teilflächen (25) aller eingeteilten Flächenelemente (2) den gleichen ersten Wert des Azimuts und die asymmetrischen Beugungsgitter (13) der zweiten Teilflächen (26) aller eingeteilter Flächenelemente (2) den gleichen zweiten Wert des Azimuts besitzen,
**dadurch gekennzeichnet,**
**dass** die Gittervektoren der asymmetrischen Beugungsgitter (12; 13) zu einer vorbestimmten ausgezeichneten Achse (14) parallel oder antiparallel ausgerichtet sind, dass die erste Teilflächen (25) und die zweite Teilflächen (26) innerhalb des Flächenelements (2) durch Zwischenstücke (36) getrennt sind und dass die Fläche der Zwischenstücke (36) mit einem symmetrischen Beugungsgitter (34) belegt ist, dessen Gittervektor zur ausgezeichneten Achse (14) parallel ist.

13. Flächenmuster nach Anspruch 12,
**dadurch gekennzeichnet, dass** das Flächenelement (2) eine in sich geschlossene Form aufweist und eine Innenfläche (38) umschliesst.

## Revendications

1. Motif de surface constitué d'éléments de surface (1 à 7) comportant des structures en relief microscopiques disposées en mosaïque, parmi lesquels plusieurs éléments de surface (2 à 6) partagés sont subdivisés en au moins une première et une deuxième surface partielle (8 ; 9) et les éléments de surface (2 à 6) comportent des réseaux de diffraction (12 ; 13) asymétriques à action diffractante, les premières surfaces partielles (8) voisines étant séparées par les deuxièmes surfaces partielles (9) dans les éléments de surface (2 à 6) partagés et subdivisés et les vecteurs de diffraction des réseaux de diffraction (12 ; 13) asymétriques des premières surfaces partielles (8) et des deuxièmes surfaces partielles (9) se différencient par leur azimut, les réseaux de diffraction (12) asymétriques des premières surfaces partielles (8) de tous les éléments de surfaces (2 à 6) partagés ayant la même première valeur d'azimut et les réseaux de diffraction asymétriques (13) des deuxièmes surfaces partielles (9) de tous les éléments de surface partagés (2 à 6) ayant la même deuxième valeur d'azimut, **caractérisé en ce que** le rapport entre la somme de toutes les premières surfaces partielles (8) du N^{ème} élément de surface partagé et la surface totale du N^{ème} élément de surface partagé constitue la valeur propre de rapport de surface A_{N} et **en ce que** le long d'un axe déterminé (14) tous les éléments de surface (2 à 6) sont disposés selon leur valeur propre de rapport de surface A_{N} entre les éléments de surface ayant la valeur propre de rapport de surface A_{N} = 0 et A_{N} = 1 dans la mosaïque de tous les éléments (1 à 7).

2. Motif de surface selon la revendication 1, **caractérisé en ce que** les premières surfaces partielles (8) et les deuxièmes surfaces partielles (9) mesurent moins de 1 mm au moins dans une direction.

3. Motif de surface selon la revendication 1 ou 2, **caractérisé en ce que** le réseau de diffraction (12) asymétrique des premières surfaces partielles (8) et le réseau de diffraction (13) asymétrique des deuxièmes surfaces partielles (9) se différencient par leur azimut d'un angle de 180°.

4. Motif de surface selon les revendications 1 à 3, **caractérisé en ce que** les premières surfaces partielles (8) et les deuxièmes surfaces partielles (9) de l'élément de surface (2 à 6) sont des bandes de formes similaires imbriquées les unes dans les autres.

5. Motif de surface selon les revendications 1 à 4, **caractérisé en ce que** les réseaux de diffraction (12 ; 13) asymétriques des premières et deuxièmes surfaces partielles (8 ; 9) de tous les éléments de surface partagés (2 à 6) présentent les mêmes paramètres de réseaux à l'exception de l'azimut.

6. Motif de surface selon les revendications 1 à 5, **caractérisé en ce qu'**au moins les éléments de surface (2 à 6) sont disposés sur un fond (1) et **en ce que** le fond (1) est occupé par le premier réseau de diffraction (12) asymétrique des premières surfaces partielles (8).

7. Motif de surface selon les revendications 1 à 6, **caractérisé en ce qu'**au moins deux des éléments de surface (2 à 6) partagés sont imbriqués l'un dans l'autre de telle sorte qu'un des éléments de surface (3) recouvre une partie de l'autre élément de surface (2) et que l'un des éléments de surface (3) comporte le premier réseau de diffraction (12) asymétrique dans les premières surfaces partielles (25) et le deuxième réseau de diffraction (13) asymétrique dans les deuxièmes surfaces partielles (26) et que dans l'autre élément de surface (2), les premières surfaces partielles (8) soient occupées par le deuxième réseau de diffraction (13) et les deuxièmes surfaces partielles (26) soient occupées par le premier réseau de diffraction (12) asymétrique.

8. Motif de surface constitué d'éléments de surface (1 à 7) comportant des structures en relief microscopiques disposées en mosaïque, parmi lesquels les éléments de surface (2 à 6) partagés subdivisés en au moins une première et une deuxième surfaces partielles (8 ; 9 ; 25 ; 26) comportent des réseaux de diffraction (12 ; 13) asymétriques à action diffractante, les vecteurs des réseaux de diffraction (12 ; 13) des premières surfaces partielles (8 ; 25) et des deuxièmes surfaces partielles (9 ; 26) se différenciant par leur azimut et les réseaux de diffraction (12) asymétriques des premières surfaces partielles (8 ; 25) de tous les éléments de surface partagés (2 à 6) ayant la même première valeur d'azimut et les réseaux de diffraction (13) asymétriques des deuxièmes surfaces partielles (9 ; 26) de tous les éléments de surface (2 à 6) partagés ayant la même deuxième valeur d'azimut, **caractérisé en ce que** les éléments de surface (2 à 6) partagés sont divisés en bandes (15 à 24) et les bandes (15 à 24) sont divisées en une première et une deuxième surfaces partielles (8, 9 ; 25 ; 26), **en ce que**, dans chaque bande divisée en une première et une deuxième surfaces partielles (8, 9 ; 25 ; 26), des premières surfaces partielles (25) voisines sont séparées par au moins une deuxième surface partielle (26), **en ce que** dans une N^{ème} des bandes (15 à 24), la somme de toutes les premières surfaces partielles (25) de la N^{ème} bande (15 à 24) présente une valeur de rapport de surface A_{N} par rapport à la surface totale et **en ce que**, le long d'un axe (14) déterminé, toutes les bandes divisées (15 à 24) sont disposées selon leur valeur de rapport de surface A_{N} entre les bandes (15 à 24) avec une valeur de rapport de surface A_{N} = 0 et A_{N} = 1 dans la mosaïque de tous les éléments (1 à 7).

9. Motif de surface selon la revendication 8, **caractérisé en ce que** l'élément de surface (2 à 6) partagé est divisé en bandes (15 à 24) transversalement par rapport à l'axe (14).

10. Motif de surface selon la revendication 8 ou 9, **caractérisé en ce que** la largeur des bandes (15 à 24) est de un millimètre ou moins ;

11. Motif de surface selon les revendications 8 à 10, **caractérisé en ce que** le premier réseau de diffraction (12) asymétrique des premières surfaces partielles (25) des bandes (15 à 24) et le deuxième réseau de diffraction (13) asymétrique des deuxièmes surfaces partielles (26) des bandes (15 à 24) se différencient par leur azimut d'un angle de 180°.

12. Motif de surface constitué d'éléments de. surface (2) comportant des structures en relief microscopiques disposées en mosaïque, parmi lesquels les éléments de surface partagés (2) subdivisés en au moins une première et une deuxième surfaces partielles (25 ; 26) comportent des réseaux de diffraction (12 ; 13) asymétriques à action diffractante, les vecteurs des réseaux de diffraction (12 ; 13) des premières surfaces partielles (25) et des deuxièmes surfaces partielles (26) se différenciant par leur azimut et les réseaux de diffraction (12) asymétriques des premières surfaces partielles (25) de tous. les éléments de surface partagés (2) ayant la même première valeur d'azimut et les réseaux de diffraction (13) asymétriques des deuxièmes surfaces partielles (26) de tous les éléments de surface (2) partagés ayant la même deuxième valeur d'azimut, **caractérisé en ce que** les vecteurs des réseaux de diffraction (12 ; 13) asymétriques sont orientés de manière parallèle ou anti-parallèle à un axe déterminé (14), **en ce que** les premières surfaces partielles (25) et les deuxièmes surfaces partielles (26) sont séparées par des pièces intermédiaires (36) à l'intérieur de l'élément de surface (2) et **en ce que** la surface des pièces intermédiaires (36) est occupée par un réseau de diffraction (34) symétrique dont le vecteur est parallèle à l'axe (14).

13. Motif de surface selon la revendication 12, **caractérisé en ce que** l'élément de surface (2) comporte une forme refermée sur elle-même et entoure une surface intérieure (38).

## Claims

1. Surface pattern composed of surface elements (1 to 7) which are arranged like a mosaic, have microscopic relief structures and of which a multiplicity of divided surface elements (2 to 6) are subdivided at least into first and second partial surfaces (8; 9), and the divided surface elements (2 to 6) contain optically diffractive, asymmetric diffraction gratings (12; 13), adjacent first partial surfaces (8) being separated by second partial surfaces (9) in the subdivided divided surface elements (2 to 6), and the grating vectors of the asymmetric diffraction gratings (12; 13) of the first partial surfaces (8) and of the second partial surfaces (9) differing in azimuth, the asymmetric diffraction gratings (12) of the first partial surfaces (8) of all the divided surface elements (2 to 6) having the same first value of the azimuth, and the asymmetric diffraction gratings (13) of the second partial surfaces (9) of all the divided surface elements (2 to 6) having the same second value of the azimuth, **characterized in that** the ratio of the sum of all the first partial surfaces (8) of the Nth divided surface element to the total surface of the Nth divided surface element forms a surface fractional value A_{N} characteristic of the Nth divided surface element, and **in that** all the divided surface elements (2 to 6) are arranged along a predetermined axis (14) in the mosaic of all the elements (1 to 7) in accordance with their surface fractional value A_{N} between the divided surface elements with the surface fractional value of A_{N} = 0 and A_{N} = 1.

2. Surface pattern according to Claim 1, **characterized in that** the first partial surfaces (8) and the second partial surfaces (9) measure less than 1 mm at least in one direction.

3. Surface pattern according to Claim 1 or 2, **characterized in that** the asymmetric diffraction gratings (12) of the first partial surfaces (8) differ by 180° in the value of the azimuth from the asymmetric diffraction gratings (13) of the second partial surfaces (9).

4. Surface pattern according to one of Claims 1 to 3, **characterized in that** the first partial surfaces (8) and the second partial surfaces (9) of the surface element (2 to 6) are mutually interlocking strips of similar shape.

5. Surface pattern according to one of Claims 1 to 4, **characterized in that** the asymmetric diffraction gratings (12; 13) of the first and the second partial surfaces (8; 9) of all the divided surface elements (2 to 6) have the same grating parameters except for the azimuth.

6. Surface pattern according to one of Claims 1 to 5, **characterized in that** at least the divided surface elements (2 to 6) are arranged on a background field (1) and **in that** the background field (1) is occupied by the first asymmetric diffraction grating (12) of the first partial surfaces (8).

7. Surface pattern according to one of Claims 1 to 6, **characterized in that** at least two of the divided surface elements (2 to 6) are mutually interlocked in such a way that one surface element (3) covers a portion of the other surface element (2), and **in that** one surface element (3) has the first asymmetric diffraction grating (12) in the first partial surfaces (25) and the second asymmetric diffraction grating (13) in the second partial surfaces (26), and in the case of the other surface element (2) the first partial surfaces (8) are occupied by the second asymmetric diffraction grating (13) and the second partial surfaces (26) are occupied by the first asymmetric diffraction grating (12).

8. Surface pattern composed of surface elements (1 to 7) which are arranged like a mosaic, have microscopic relief structures and of which the divided surface elements (2 to 6) subdivided at least into first and second partial surfaces (8; 9; 25; 26) contain optically diffractive, asymmetric diffraction gratings (12; 13), the grating vectors of the asymmetric diffraction gratings (12; 13) of the first partial surfaces (8; 25) and of the second partial surfaces (9; 26) differing in azimuth, and the asymmetric diffraction gratings (12) of the first partial surfaces (8; 25) of all the divided surface elements (2 to 6) having the same first value of the azimuth, and the asymmetric diffraction gratings (13) of the second partial surfaces (9; 26) of all the divided surface elements (2 to 6) having the same second value of the azimuth, **characterized in that** the subdivided surface elements (2 to 6) are subdivided into strips (15 to 24), and the strips (15 to 24) are subdivided into first and second partial surfaces (8, 9; 25; 26), **in that** in each strip (15 to 24) subdivided into first and second partial surfaces (8, 9; 25; 26) adjacent first partial surfaces (25) are separated by at least one second partial surface (26), **in that** in an Nth of the strips (15 to 24) the sum of all the first partial surfaces (25) of the Nth strip has a surface fractional value A_{N} relative to the total area of the Nth strip (15 to 24), and **in that** all the subdivided strips (15 to 24) are arranged along a predetermined axis (14) in the mosaic of all the elements (1 to 7) in accordance with their surface fractional value A_{N} between the strips (15 to 24) with the surface fractional value of A_{N} = 0 and A_{N} = 1.

9. Surface pattern according to Claim 8, **characterized in that** the subdivided surface element (2 to 6) is subdivided transverse to the determined axis (14) or subdivided into the strips (15 to 24).

10. Surface pattern according to Claim 8 or 9, **characterized in that** the width of the strips (15 to 24) is a millimetre or less.

11. Surface pattern according to one of Claims 8 to 10, **characterized in that** the first asymmetric diffraction grating (12) of the first partial surfaces (25) of the strips (15 to 24), and the second asymmetric diffraction grating (13) of the second partial surfaces (26) of the strips (15 to 24) have a difference in azimuth of 180°.

12. Surface pattern composed of surface elements (2) which are arranged like a mosaic, have microscopic relief structures and of which the divided surface elements (2) subdivided at least into first and second partial surfaces (25; 26) contain optically diffractive, asymmetric diffraction gratings (12; 13), the grating vectors of the asymmetric diffraction gratings (12; 13) of the first partial surfaces (25) and of the second partial surfaces (26) differing in azimuth, and the asymmetric diffraction gratings (12) of the first partial surfaces (25) of all the divided surface elements (2) having the same first value of the azimuth, and the asymmetric diffraction gratings (13) of the second partial surfaces (26) of all the divided surface elements (2) having the same second value of the azimuth, **characterized in that** the grating vectors of the asymmetric diffraction gratings (12; 13) are aligned parallel or antiparallel to a predetermined axis (14), **in that** the first partial surfaces (25) and the second partial surfaces (26) are separated inside the surface element (2) by spaces (36), and **in that** the surface of the spaces (36) is occupied by a symmetrical diffraction grating (34) whose grating vector is parallel to the determined axis (14).

13. Surface pattern according to Claim 12, **characterized in that** the surface element (2) has a self-closed shape and encloses an inner surface (38).
